# EUROPÄISCHE PATENTANMELDUNG

(11) **EP 2 040 014 A2**
(43) Veröffentlichungstag der Anmeldung: **25.03.2009**
(21) Anmeldenummer: 08010606.5
(22) Anmeldetag: 11.06.2008
(51) Int. Cl.: F24J 2/52

(54) **Stapelbares Flachdach-/ Bodengestell für Solarpaneele**

(30) Priorität: 24.09.2007 DE 102007045553
(71) Anmelder: SOLARWORLD AKTIENGESELLSCHAFT, 53113 Bonn (DE)
(72) Erfinder: Jacob, Olaf, 53797 Lohmar (DE); Hund, Markus, 53879 Euskirchen (DE)
(74) Vertreter: Grünecker, Kinkeldey, Stockmair & Schwanhäusser Anwaltssozietät

(57) **Zusammenfassung**

Die Erfindung betrifft ein stapelbares Flachdach- / Bodengestell für Solarpaneele mit einem schrägen pultförmigen Auflagebereich für das Solarpaneel und mit plattenartigen Bodenbereichen. Hierbei sind angrenzend an den plattenartigen Bodenbereich wenigstens zwei Auflagevorsprünge ausgebildet, wobei jeder Vorsprung eine schräge Auflagefläche aufweist und wobei der schräge pultartige Auflagebereich aus diesen schrägen Auflageflächen der Vorsprünge besteht.

## Beschreibung

Die Erfindung betrifft ein stapelbares Flachdach- / Bodengestell für Solarpaneele mit einem schrägen pultförmigen Auflagebereich für das Solarpaneel und mit beschwerbaren plattenartigen Bodenbereichen.

In den letzten Jahren hat sich das allgemeine Interesse, wie auch das Investitionsvolumen in alternative Energien, und hier insbesondere in Richtung der Solarenergie, stark erhöht. Die Erzeugung von Solarenergie setzt eine Solaranlage voraus, die eine Vielzahl von Solarmodulen bzw. Solarpaneelen aufweist. Der technische Aufbau und die Funktionsweise derartiger Solarpaneele sind hinreichend bekannt. In der Regel werden diese als sogenannte Module hergestellt und vorzugsweise auf Dächern oder freistehenden gerüstartigen Befestigungsvorrichtungen fest oder beweglich montiert.

Hierbei sind Traganordnungen bekannt, die aus einem Grundkörper mit dreieckigem oder trapezförmigen Querschnitt bestehen, wobei die Solarpaneele auf der zur Dach- oder Bodenebene geneigten Fläche angeordnet werden.

Die DE 69815168 T 2 offenbart eine Vorrichtung zum Tragen eines oder mehrerer Solarpaneele und / oder Wärmekollektoren, welche auf einem flachen Dach angeordnet werden können, wobei die Vorrichtung wannenartig ausgebildet ist, mit einer Bodenwand, sich von der Bodenwand nach oben erstreckenden Rückwand und Vorderwand sowie zwei dazwischen und gegenüberliegend angeordneten Seitenwänden. Im Einsatz wird diese wannenartige Vorrichtung vorzugsweise mit der Bodenwand nach unten angeordnet, Beschwerung auf der Bodenwand angeordnet und dieser offene Aufbau anschließend mit dem Solarpaneel geschlossen. Die beschriebene Vorrichtung ist hierbei aus Plastik hergestellt, d.h. einem Material, das durch die Umgebungswitterung stark beeinträchtigt wird, und bei welchem es durch intensive Sonneneinstrahlung in den Sommermonaten oder besondere Kälte in den Wintermonaten zu Rissen und Brüchen kommen kann.

Im Hinblick darauf, dass die Solarpaneele in der Herstellung sehr teuer sind, ist die Gefahr der Beschädigung der Solarpaneele durch brechende Träger ein unerwünschtes Risiko.

Die bekannten Gestelle für Solarpaneele zeichnen sich insbesondere durch eine sehr aufwendige Fertigung sowie komplizierte und zeitaufwändige Befestigung der Solarpaneele an dem Gestell und des Gestells auf dem gewünschten Untergrund aus.

Aufgabe der vorliegenden Erfindung ist es daher, ein Flachdach- / Bodengestell für Solarpaneele bereitzustellen, welches sich einerseits durch einen besonders einfachen Aufbau und Befestigungsmöglichkeiten auszeichnet, gleichzeitig witterungsbeständig ist und sich andererseits durch möglichst geringe Herstellungskosten auszeichnet.

Diese Aufgabe wird für ein stapelbares Flachdach- / Bodengestell für Solarpaneele mit einem schrägen pultförmigen Auflagebereich für das Solarpaneel und mit beschwerbaren plattenartigen Bodenbereichen dadurch gelöst, dass angrenzend an den plattenartigen Bodenbereich wenigstens zwei Auflagevorsprünge ausgebildet sind, wobei jeder Vorsprung eine schräge Auflagefläche aufweist und wobei der schräge pultartige Auflagebereich aus diesen schrägen Auflageflächen der Vorsprünge besteht.

Durch die schrägen Auflageflächen der Vorsprünge wird ein Auflagebereich bereitgestellt, der sich auf ein Minimum beschränkt, so dass das Gestell möglichst leicht ausgebildet werden kann. Gleichzeitig vereinfacht sich die Montage des Solarpaneels auf diesen Auflageflächen erheblich, so dass die Montage viel schneller als bei bekannten Gestellen durchgeführt werden kann.

Die Vorsprünge werden hierbei gleichzeitig mit dem Bodenbereich ausgebildet, so dass an der Unterseite des Bodenbereichs Mulden ausgebildet sind, welche die Vorsprünge eines anderen Gestells zur aufeinandergestapelten Lagerung aufnehmen.

Gemäß einer bevorzugten Ausführungsform sind die beiden Vorsprünge hintereinander angeordnet, wobei der hintere Vorsprung höher als der vordere Vorsprung ausgebildet ist. Auf diese Weise wird sicher gestellt, dass sich die beiden schrägen Auflageflächen der Vorsprünge in einer Ebene zueinander befinden, auf der das Solarpaneel aufgelegt werden kann.

Gemäß einer anderen bevorzugten Ausführungsform können wenigstens in den sich an die Vorsprünge angrenzenden Abschnitten des Bodenbereichs Stege ausgebildet sein, welche sich parallel zu den hintereinander angeordneten Vorsprüngen erstrecken. Durch die Bereitstellung entsprechender Stegelemente ist es z. B. möglich, nach dem Beschweren des Bodenbereichs, für einen ausreichenden Wasserabfluss zu sorgen.

Vorzugsweise können rechts und/oder links von den Vorsprüngen zwei unter einem vorbestimmten Abstand parallel zueinander angeordnete Stege ausgebildet sein, wobei die Stege von der Unterseite offen und im Querschnitt rechteckig ausgebildet sind, und wobei die Außenkante des Bodenbereichs von dem Steg gebildet wird. Diese Ausführungsform hat sich in der Praxis als besonders einfach in der Herstellung erwiesen.

Hierbei können im montierten Zustand jeweils zwei Stege aufweisende Abschnitte des Bodenbereichs nebeneinander angeordnet sein, wobei ein an der Außenkante angeordneter Steg größer ausgebildet ist, als die anderen Stege und auf den an der Außenkante des benachbarten Bodenbereichs angeordneten Steg aufstülpbar ist. Dies stellt eine besonders einfache Art und Weise zur Verfügung, zwei einzelne Module miteinander zu verbinden, da keine aufwendigen Verschraubungen oder komplizierte Verbindungselemente notwendig sind. Vorzugsweise werden hierzu jeweils eine Hälfte der Gestelle mit einem rechten Bodenabschnitt und die andere Hälfte der Gestelle mit einem linken Bodenabschnitt hergestellt, die dann vor Ort miteinander verbunden werden können, um ein komplettes Gestell für ein Solarpaneel zur Verfügung zu stellen. Entsprechende Gestellelemente sind daher relativ klein und platzsparend in der Lagerung. Gleichzeitig ist die Handhabung aufgrund der verringerten Größe einfacher. Hierbei können auch die beiden Bodengestelle mit wahlweise rechten oder linken Bodenbereichabschnitt aufeinander gestapelt werden.

Gemäß einer weiteren bevorzugten Ausführungsform sind vier Vorsprünge an den Bodenbereich angrenzend ausgebildet, wobei jeweils zwei Paare vorderer und hinterer Vorsprünge unter einem vorbestimmten Abstand zueinander an den Bodenbereich angrenzend angeordnet sind. Folglich erstreckt sich der Bodenbereich auch zwischen den gegenüberliegenden Paaren der Vorsprünge. In der Praxis hat sich gezeigt, dass die Bereitstellung von vier Vorsprüngen, eine ausreichende Auflagefläche zur Verfügung stellt, um eine stabile und sichere Lage des Solarpaneels zu gewährleisten. Da zwischen jedem Paar vorderer und hinterer Vorsprünge ein vorbestimmter Abstand vorgesehen ist, können in diesem Zwischenraum Beschwerungsmittel eingeführt werden, welche eine Fixierung des Bodengestells auf dem Untergrund ermöglichen.

Der Abstand zwischen jedem Paar der Vorsprünge gewährleistet eine ausreichend stabile Lagerung des Solarpaneels, da hier z.B. an vier Eckbereichen des Solarpaneels Auflageflächen bereitgestellt werden.

Gemäß einer anderen bevorzugten Ausführungsform grenzt der Bodenbereich jeweils an eine Vorderkante jedes vorderen Vorsprungs und eine Hinterkante jedes Vorsprunges an. Hierdurch wird ein ausreichender großer Abschnitt zur Beschwerung des Bodenbereichs vor und hinter den Vorsprüngen bereitgestellt. Diese Bereiche sind insbesondere bei der Montage leicht zugänglich, und ermöglichen daher eine schnelle und problemlose Montage.

Gemäß einer bevorzugten Ausführungsform der vorliegenden Erfindung können die Vorsprünge jeweils kegelstumpfartig ausgebildet sein. Hierdurch wird gewährleistet, dass die erfindungsgemäßen Flachdach- / Bodengestelle aufeinander gestapelt werden können, da die einzelnen Vorsprünge einfach ineinander geführt werden können.

Gemäß einer weiteren bevorzugten Ausführungsform kann vorgesehen sein, dass der Bereich zwischen jedem Paar vorderer und hinterer Vorsprünge muldenförmig ausgebildet ist. Hierdurch wird die Fertigung vereinfacht, da keine harten Kanten auszubilden sind, sondern ein weicher Übergang zwischen den Vorsprüngen bereitgestellt wird. Gleichzeitig vereinfacht sich auch das Aufeinanderstapeln, da die weichen Übergänge wie Führungsschrägen wirken.

Gemäß einer anderen bevorzugten Ausführungsform ist der muldenförmig ausgebildete Bereich oberhalb des Bodenbereichs angeordnet und erstreckt sich bis zu den Seitenbereichen der hintereinander angeordneten Vorsprünge. Auf diese Weise bildet jedes Paar hintereinander angeordneter Vorsprünge ein kompaktes sich über die Oberfläche des Bodenbereichs erhebendes Element, so dass die hintereinander gebildeten Vorsprünge als eine Einheit zusammen ausgebildet sind. Hierbei kann sich die Außenkante jedes Vorsprungpaares wulstartig über den Bodenbereich erheben.

Gemäß noch einer anderen bevorzugten Ausführungsform können die beiden voneinander beabstandeten Paare der Vorsprünge an ihren sich gegenüberliegenden Seitenflächen sich senkrecht von dem Bodenbereich nach oben erstreckende Seitenflächenabschnitte aufweisen, welche anschließend unter einem vorbestimmten Winkel in die Vorsprünge bzw. die Mulde übergehen.

Gemäß einer weiteren bevorzugten Ausführungsform der vorliegenden Erfindung sind die schrägen Auflageflächen jedes Vorsprungs mit parallel zueinander angeordneten Rillen ausgebildet, die in einer Linie von dem vorderen Vorsprung zu dem hinteren Vorsprung verlaufen. Diese Rillen dienen z.B. als Ablaufkanäle für Regenwasser.

Gemäß einer anderen bevorzugten Ausführungsform können unterhalb der Auflagefläche in einem Bereich zwischen zwei Rinnen an der Vorder- und Rückseite der Vorsprünge Durchtrittsöffnungen zur Aufnahme eines sich zwischen den beiden hintereinander angeordneten Vorsprüngen erstreckenden Profilelements ausgebildet sein. Da die Vorsprünge hohl sind, kann hier auf die Ausbildung komplizierter Aufnahmeelemente verzichtet werden und einfach auszubildende Durchtrittsöffnungen reichen aus, um hier innerhalb der beiden hintereinander angeordneten Vorsprünge ein zusätzliches Profilelement anzuordnen. Durch die zusätzliche Bereitstellung einer Profilschiene kann die Befestigung des Solarpaneels an dem Flachdach- / Bodengestell deutlich vereinfacht werden.

Vorteilhafterweise kann sich das Profilelement von der Rückseite des hinteren Vorsprungs bis zu der Vorderseite des vorderen Vorsprungs erstrecken. Auf diese Weise wird sichergestellt, dass sich das Profilelement nicht nur über den Bereich zwischen den beiden Vorsprüngen erstreckt, sondern auch innerhalb des Vorsprungs. Hierdurch wird die Fixierung des Profilelements deutlich verstärkt.

Vorteilhafterweise kann im Bereich der Durchtrittsöffnung an der Vorderseite des vorderen Vorsprungs ein Anschlagelement ausgebildet sein, welches die Endposition des langgestreckten Elementes festlegt. Hierdurch wird die Positionierung des langgestreckten Elements vereinfacht, da dasselbe nur bis zum Anschlag eingeführt werden muss und automatisch die korrekte Position einnimmt.

Vorteilhafterweise können die Durchtrittsöffnungen an der von beiden nebeneinander angeordneten Stegen abgewandten Hälfte der Vorsprünge angeordnet sein. Die Durchtrittsöffnungen sind folglich nicht mittig innerhalb der Vorsprünge angeordnet, sondern an der Außenseite, so dass die Befestigung der Solarpaneele an Positionen im bereich der Auflageflächen erfolgt, die möglichst weit voneinander beabstandet sind.

Zweckmäßigerweise können die Vorsprünge im Bereich der Durchtrittsöffnungen verstärkt ausgebildet sein. Dies ist eine zusätzliche Sicherungsmaßnahme, die zur besseren Fixierung des Solarpaneels im Bereich der Vorsprünge beiträgt.

Gemäß einer weiteren bevorzugten Ausführungsform können in den Auflageflächen der Vorsprünge, oberhalb der Durchtrittsöffnungen Aufnahmeöffnungen ausgebildet sein, wobei die Aufnahmeöffnungen in dem hinteren Vorsprung in der Nähe der hinteren Kante und die Aufnahmeöffnung in dem vorderen Vorsprung in der Nähe des Anschlagelements angeordnet ist. Diese zusätzlichen Aufnahmeöffnungen dienen dazu, Fixierelemente mit der Profilschiene zu verbinden, ohne dass hierzu zusätzlich komplizierte Verbindungsmittel eingesetzt werden müssen.

Zweckmäßigerweise können oberhalb des Anschlagselementes Fixierabschnitte angeordnet sein, welche sich beidseitig der Aufnahmeöffnung erstrecken. Hierdurch wird eine bessere Positionierung des Profilelements innerhalb des vorderen Vorsprungs erzielt.

Vorteilhafterweise kann vorgesehen sein, dass an der von dem vorderen Vorsprung abgewandten Kante der durch den hinteren Vorsprung gebildeten schrägen Auflagefläche Erhebungen angeordnet sind.

Gemäß einer weiteren bevorzugten Ausführungsform sind an der von dem vorderen Vorsprung abgewandten Seite der Erhebungen Schlitze ausgebildet. Diese Schlitze stellen Fixier- und Befestigungselemente für die Montage der Solarpaneele zur Verfügung.

Vorteilhafterweise sind die Erhebungen zwischen den Rillen ausgebildet.

Gemäß einer anderen bevorzugten Ausführungsform ist unterhalb der Vorderkante des vorderen Vorsprunges eine Aufnahmeöffnung ausgebildet. In der Praxis dient diese Aufnahmeöffnung zur Aufnahme eines Fixierelementes zur Montage des Solarpaneels. Hierbei kann in die Öffnung ein zusätzliches Aufnahmeelement eingeführt und an dem Vorsprung fixiert sein.

Gemäß einer anderen bevorzugten Ausführungsform können in den einander zugewandten Seitenflächen zweier benachbarter hinterer Vorsprünge parallel zueinander verlaufende Schlitze ausgebildet sein. Die Bereitstellung der Schlitze ermöglicht es, zwischen jedem Paar von hinteren Vorsprüngen eine stabilisierende Rückwand einzuführen, die dann einfach in die Schlitze eingesteckt wird. Hierdurch verringert sich der Montageaufwand einer entsprechenden Rückwand auf ein Minimum. Die Rückwand dient hierbei auch als Windleitblech.

Vorteilhafterweise kann vorgesehen sein, dass die Vorderkante des vorderen Vorsprungs und die hintere Kante des hinteren Vorsprungs jeweils abgerundet ausgebildet sind.

Gemäß einer weiteren bevorzugten Ausführungsform kann der Bodenbereich an der den Vorsprüngen zugewandten Oberflächen eine gewellte Struktur aufweisen. Hierbei erstrecken sich die Wellen vorzugsweise parallel zu jedem Paar Vorsprünge.

Ein entsprechend gewellter Bodenbereich hat sich insbesondere bei der Beschwerung desselben mit Kies oder anderen groben bzw. körnigen Materialien bewährt, da hierdurch eine bessere Beschwerung ermöglicht wird.

Gemäß einer anderen bevorzugten Ausführungsform weist die Unterseite des Bodenbereichs Greifelemente auf, um höhere eine Haftreibung zu erzielen. Vorteilhafterweise sind die Greifelemente als spitze Vorsprünge ausgebildet. Hierdurch wird ein Eingreifen des Bodenbereichs auf dem Untergrund erzielt, wodurch bereits vor dem Beschweren des Bodenbereichs ein Verrutschen des Gestells von dem Untergrund ausgeschlossen wird.

Vorteilhafterweise wird das Gestell aus HDPE und/oder recyceltem HDPE hergestellt sein. Diese Materialien haben sich in der Praxis besonders bewährt.

Die Erfindung betrifft des weiteren ein Gestellsystem für Solarpaneele umfassend wenigstens zwei stapelbare Flachdach- / Bodengestelle für Solarpaneele, wobei jeweils zwei mit den Vorsprüngen unmittelbar nebeneinander angeordnete Flachdach- / Bodengestelle durch ein Verbindungselement miteinander fixierbar sind und wobei beide Gestelle auf das Verbindungselement aufstülpbar sind. Ein entsprechendes Verbindungselement stellt ein besonders einfaches Montierungselement zur Verfügung, da die Gestelle auf einfache Art und Weise zueinander fixierbar sind und schnell aufgebaut werden können.

Hierbei kann das Verbindungselement im Querschnitt U-förmig ausgebildet sein, wobei die beiden U-Schenkel im wesentlichen der Form der Stege im Bereich der Flachdach- / Bodengestelle entsprechen, und ein Aufstülpen der Unterseite der Flachdach- / Bodengestelle gewährleisten. Auch hierbei ermöglichen die Stege wiederum ein sehr einfaches Verbinden der einzelnen Gestellelemente miteinander.

Im Folgenden wird eine Ausführungsform der vorliegenden Erfindung anhand der beigefügten Zeichnungen näher erläutert.

### Es zeigt:

- Figur 1: ein erfindungsgemäßes Flachdach- / Bodengestell für Solarpaneele,
- Figur 2: das in Figur 1 dargestellte erfindungsgemäße Flachdach- / Bodengestell mit angeordnetem Solarpaneel und zusätzlichen Bodenbeschwerungen in einer Ansicht schräg von vorne,
- Figur 3: das in Figur 2 dargestellte Gestell in einer Ansicht schräg von hinten,
- Figur 4: die Befestigung des Solarpaneels an dem vorderen Vorsprung teilweise im Schnitt,
- Figur 5: die Befestigung des Solarpaneels an dem hinteren Vorsprung teilweise im Schnitt,
- Figur 6: die Bodenplatte mit darauf angeordneten Beschwerungselementen sowie den Greifelementen.
- Figur 7: eine andere Ausführungsform eines erfindungsgemäßen Flachdach- / Bodengestells für Solarpaneele, wobei ein rechtes Element dargestellt ist,
- Figur 8: ein Flachdach- / Bodengestell für Solarpaneele gemäß Figur 7, wobei ein linkes Element dargestellt ist,
- Figur 9: die Flachdach- / Bodengestelle für Solarpaneele nach den Figuren 7 und 8, welche zu einem vollständigen Gestell miteinander verbunden wurden,
- Figur 10: einen Ausschnitt der Rückseite des hinteren Vorsprungs der Flachdach- / Bodengestelle nach Figur 7 oder 8,
- Figur 11: einen Ausschnitt der Vorderseite des vorderen Vorsprungs der Flachdach- / Bodengestelle für Solarpaneele nach Figur 7 und 8,
- Figur 12: das Flachdach- / Bodengestell nach Figur 9 mit darauf befestigtem Solarpaneel von vorne,
- Figur 13: das in Figur 12 dargestellte Flachdach- / Bodengestell von hinten,
- Figur 14: ein Verbindungselement für die Flachdach- / Bodengestelle, und
- Figur 15: zwei miteinander über das Verbindungselement gemäß Figur 14 verbundene Flachdach- / Bodengestelle.

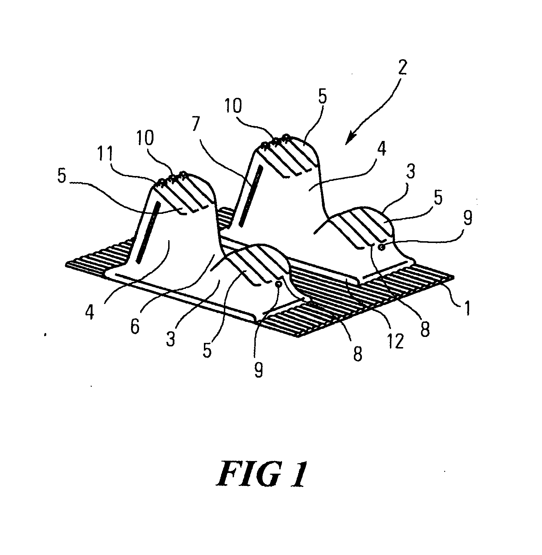

In Figur 1 ist ein erfindungsgemäßes Flachdach- / Bodengestell für Solarpaneele dargestellt.

Im einzelnen umfasst dieses Gestell einen Bodenbereich 1, sowie zwei darauf angeordnete Vorsprungpaare 2, welche jeweils einen vorderen Vorsprung 3 und einen dahinter unter einem vorbestimmten Abstand angeordneten Vorsprung 4 umfassen. Hierbei ist jedes Paar der Vorsprünge 3, 4 als eine Einheit ausgebildet, und erhebt sich zusammen über den eigentlichen Bodenbereich hinaus, d.h. jedes wird von einem umlaufenden, wulstartigen Rand umgeben.

Jeder Vorsprung 3, 4 ist mit einer schrägen Auflagefläche 5 versehen, welche solchermaßen zueinander ausgerichtet sind, dass jeweils die Auflageflächen der hinteren Vorsprünge 4 und die Auflageflächen der vorderen Vorsprünge 3 parallel zueinander ausgebildet sind, und die Auflageflächen zweier hintereinander angeordneter Vorsprünge in einer Ebene zueinander verlaufen, d.h. die vier Auflageflächen bilden Abschnitte einer gemeinsamen Auflagefläche.

Jedes Paar der Vorsprünge ist hierbei als Teil des Bodenbereichs ausgebildet, d.h. jedes Paar der Vorsprünge ist von der Unterseite hohl ausgebildet, so dass zwei Bodenbereiche aufeinander gestapelt werden können und die Vorsprünge des unteren Bodenbereichs in die Vorsprünge des oberen Bodenbereichs eingeführt werden können.

Im einzelnen ist jeder Vorsprung kegelstumpfartig ausgebildet, wobei die Auflagefläche 5 kleiner als die Basisfläche ausgebildet ist. Zwischen dem vorderen Vorsprung 3 und dem hinteren Vorsprung 4 ist ein muldenförmiger Bereich 6 ausgebildet, welcher oberhalb des Bodenbereichs angeordnet ist, und sich an den Seiten in einem vorbestimmten Winkel auf den Bodenbereich zu erstreckt.

An den einander gegenüberliegenden Seitenflächen der hinteren Vorsprünge 5 sind Schlitze 7 in den Seitenflächen ausgebildet, in welche während der Montage eine Rückwand eingesteckt werden kann. Die Schlitze 7 sind parallel zueinander ausgebildet, und verlaufen jeweils an exakt der gleichen Position. Durch die Länge der Schlitze wird definiert, wie weit sich eine entsprechende Rückwand dem Bodenbereich nähern kann.

Die Auflagefläche jedes Vorsprunges 5 ist mit Rillen 8 versehen, die sich parallel zueinander über die beiden voneinander beabstandeten Paare der Vorsprünge 2 erstrecken, und in einer Linie von der Auflagefläche 5 des vorderen Vorsprungs zu der Auflagefläche 5 des hinteren Vorsprungs verlaufen. Die Rillen 8 sind hierbei ausreichend groß ausgebildet, um zu gewährleisten, dass nach dem Montieren des Solarpaneels die Unterseite des Solarpaneels mit Umgebungsluft versorgt werden kann, so dass eine Überhitzung des Solarpaneels in dem Bereich der Auflageflächen 5 vermieden wird.

Jeder vordere Vorsprung 3 weist ferner an seiner Vorderfläche, d.h. der von dem hinteren Vorsprung abgewandten Fläche in der Nähe der Kante der Auflagefläche 5 eine Aufnahmeöffnung 9 auf. In diese Aufnahmeöffnung können Befestigungsmittel zur Befestigung des Solarpaneels an dem vorderen Vorsprung eingeführt werden.

Ferner ist jeder hintere Vorsprung 4 an seiner Auflagefläche 5, an der von dem vorderen Vorsprung 3 abgewandten Kante, mit Fixierelementen 10 versehen, welche als Erhebungen oder Höcker ausgebildet sind, und die sich oberhalb der Auflagefläche 5 erstrecken. Die Fixierelemente 10 sind hierbei zwischen den Rillen 8 angeordnet, um die Luftzirkulation nicht zu beeinträchtigen Die Anzahl der Fixierelemente 10 kann hierbei den Bereichen zwischen den Rillen 8 entsprechen, im vorliegenden Fall sind jeweils drei dieser Elemente vorgesehen.

Die Fixierelemente 10 sind an der von dem vorderen Vorsprung 3 abgewandten Seite mit Schlitzen 11 ausgebildet. Diese Schlitze 11 sind hierbei parallel zu der Auflagefläche 5 in dem Fixierelement angeordnet. Bei der Montage des Solarpaneels kann eine an wenigstens einer Kante des Solarpaneels angeordnete Fixierkante mit umlaufenden Rand in diesen Schlitz eingeführt werden und auf diese Weise an den hinteren Vorsprüngen fixiert werden.

Die einander zugewandten Seitenflächen der beiden voneinander beabstandeten Vorsprungpaare 2 weisen jeweils einen unmittelbar an den Bodenbereich angrenzenden unteren Seitenwandabschnitt 12 auf, welcher sich senkrecht von dem Bodenbereich aus erhebt und dann langsam unter einem vorbestimmten Winkel in die Vorsprünge 3, 4 übergeht. Diese Seitenwandabschnitte ermöglichen ein Einführen von zusätzlichen Beschwerungselementen zwischen jedem Paar der Vorsprünge. Hierbei können insbesondere Gehwegplatten einfach eingeführt werden, wobei die Seitenwandabschnitte als Einführhilfe dienen.

Der Bodenbereich 1 ist an seiner Oberfläche strukturiert ausgebildet, vorzugsweise mit einem wellenförmig ausgebildetem Muster. Hierbei dient dieses wellenförmige Muster der besseren Fixierung insbesondere von losen Beschwerungsmitteln, wie z.B. Kies.

Wie ferner in Figur 1 dargestellt, grenzt der Bodenbereich 1 jeweils vorne und hinten an jedes Paar der Vorsprünge an, so dass Bodenelemente bereitgestellt werden, welche während der Montage beschwert werden können, um so das erfindungsgemäße Gestell auf dem Untergrund zu fixieren. Die Bereiche vor und hinter dem Vorsprungpaar 2, wie auch zwischen den Vorsprungpaaren sind leicht zugängig, so dass hier keine aufwendigen Montagearbeiten notwendig sind, sondern die Beschwerung leicht und schnell durchgeführt werden kann.

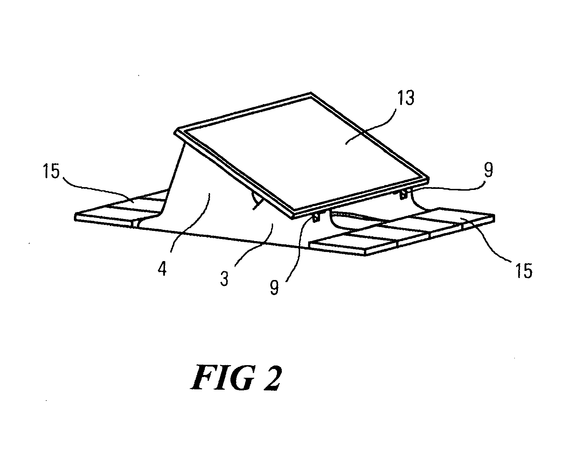

In Figur 2 ist das in Figur 1 dargestellte Gestell nach erfolgter Montage des Solarpaneels 13 dargestellt. Es wird deutlich, dass das Solarpaneel mit seiner Unterseite auf den Auflageflächen 5 der Vorsprünge 3, 4 aufliegt. Im Bereich der Vorderseite des vorderen Vorsprungs 3 sind die Aufnahmeöffnungen 9 dargestellt, in welche mit dem Solarpaneel verbundene Befestigungselemente eingreifen können. Durch die schräge Ausbildung der Auflagefläche 5 wird auch die schräge Anordnung des Solarpaneels 13 erzielt.

Auf den über die Vorsprungpaare 2 überstehenden Abschnitten des Bodenbereichs wurden Beschwerungselemente 15 angeordnet, durch welche ein Verrutschen des Gestells nach erfolgter Montage verhindert wird. Diese Beschwerungselemente 15 können auch zwischen jedem Vorsprungpaar 2 angeordnet sein.

Gleichermaßen ist es auch möglich, statt der aufgelegten Beschwerungselemente 15 Ballasttaschen vorzusehen, welche z. B. über jeden Vorsprung gelegt werden, und vor und hinter den Vorsprüngen je nach Bedarf mit Ballastmitteln angefüllt werden können.

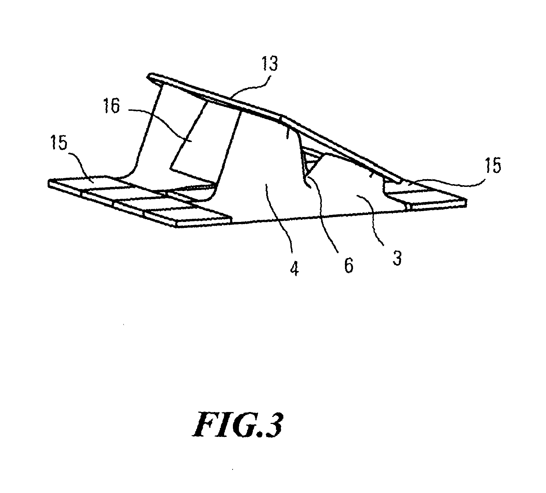

In Figur 3 ist das erfindungsgemäße Gestell mit darauf angeordneter Solarpaneele von hinten dargestellt. Wie deutlich wird, wurde zwischen den beiden hinteren Vorsprüngen 4 der einander gegenüberliegenden Vorsprungpaare 2 in die Schlitze 7 eine Rückwand 16 eingeführt, welche vor dem Aufbringen des Solarpaneels eingeführt werden muss. Die Rückwand ist hierbei nicht bis auf den Bodenbereich abgesenkt um Luftzirkulation zu gewährleisten.

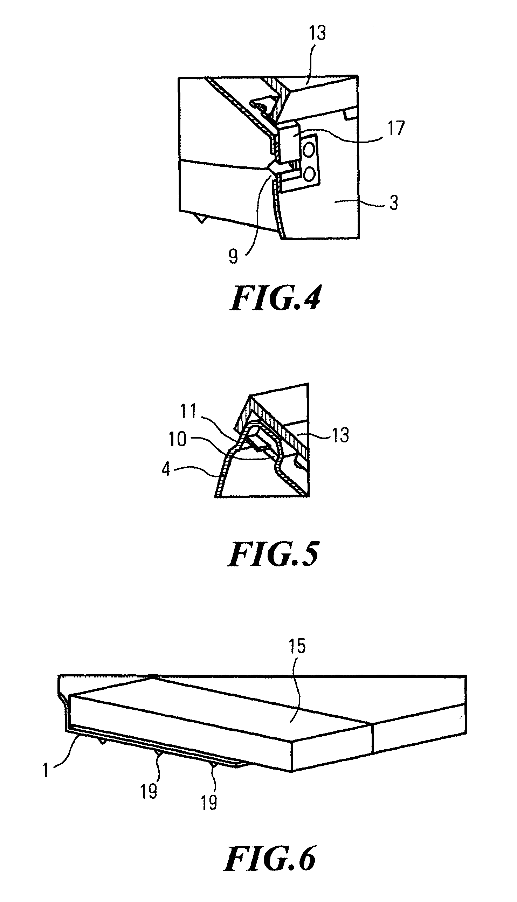

Die Befestigung des Solarmoduls an den vorderen und hinteren Vorsprüngen ist in den Figuren 4 und 5 dargestellt. Hierbei zeigt Figur 4 die Befestigung an dem vorderen Vorsprung im Schnitt. Das Solarpaneel 13 weist an seiner oberen und unteren Kante jeweils einen umlaufenden Rand auf, der an der Unterseite des Solarmoduls rinnenförmig bzw- U-förmig ausgebildet ist. In den unteren U-Schenkel wird ein Federelement 17 eingeklipst bzw. befestigt und dieses erstreckt sich bis in die Aufnahmeöffnung 9, um so das Solarpaneel vorne zu fixieren. Vorzugsweise weist das Federelement hierbei ein zweifach abgewinkeltes Element auf, welches in die Aufnahmeöffnung eingreift, und in dieser unter Spannung fixiert wird. Dieses Federelement ist besonders einfach in der Bedienung und kann jederzeit fixiert und gelöst werden.

An dem hinteren Vorsprung 4 wird das Solarpaneel an dem Fixierelement 10 befestigt, indem die umlaufende Kante bzw. der untere U-Schenkel in die Schlitze 11 der Fixierelemente 10 eingeführt wird. Hierdurch wird eine ausreichende Befestigung des Solarpaneels an dem erfindungsgemäßen Gestell gewährleistet.

Im Einsatz wird zunächst die Kante des Solarpaneels 13 in die Schlitze 11 der hinteren Fixierelemente 10 der hinteren Vorsprünge 4 eingeführt und erst anschließend die vorderen Federelemente 17 an der vorderen Kante des Solarpaneels befestigt bzw. eingeklipst und in die Aufnahmeöffnungen 9 eingeführt bzw. eingeklipst.

Figur 6 zeigt die Unterseite des Bodenbereichs, insbesondere die spitzen Vorsprünge 19, welche ein Eingreifen des Bodenbereichs in den gewünschten Untergrund ermöglichen. Durch die zusätzliche Fixierung mit den Beschwerungsplatten 15 wird hier noch ein besseres Eindrücken der Greifelemente 19 in den Untergrund erzielt und damit eine bessere Fixierung und Haftreibung des erfindungsgemäßen Gestells.

Vorzugsweise wird das erfindungsgemäße Gestell aus Kunststoff, insbesondere HDPE oder recyceltem HDPE hergestellt.

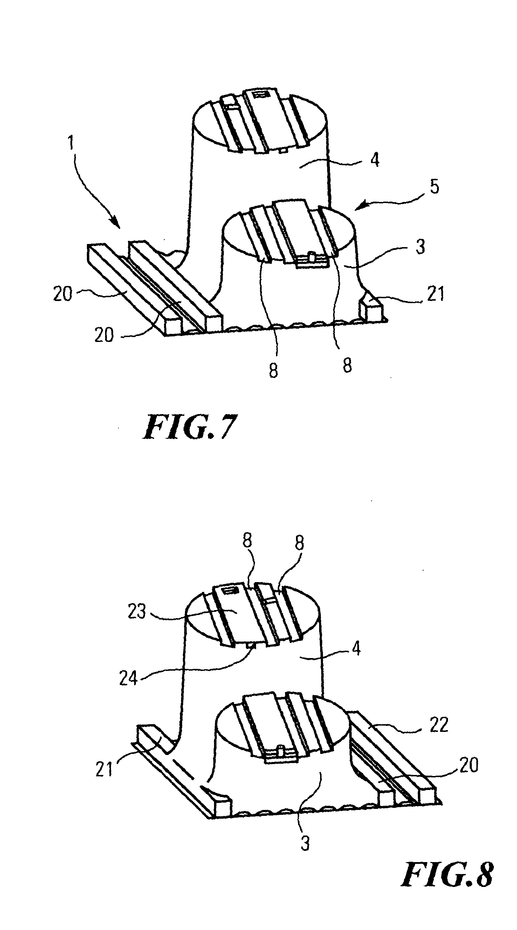

Eine andere Ausführungsform der vorliegenden Erfindung ist in den Figuren 7 bis 15 dargestellt. Hierbei werden gleiche Elemente mit den gleichen Bezugszeichen versehen. Im Gegensatz zu der ersten Ausführungsform besteht das Gestell hierbei aus zwei Teilelementen, die erst vor Ort miteinander verbunden werden.

Im Einzelnen umfasst das in Figur 7 dargestellte Gestell einen Bodenbereich 1, sowie ein darauf angeordnetes Vorsprungpaar, umfassend einen vorderen Vorsprung 3 und einen dahinter unter einem vorbestimmten Abstand angeordneten Vorsprung 4. Die Vorsprünge 3 und 4 sind hier entsprechend den Vorsprüngen gemäß der Ausführungsform der Figuren 1 bis 6 ausgebildet, so dass hier auf eine nähere Beschreibung verzichtet wird. Dieses Gestellt bildet im Einsatz ein rechtes Element des gesamten Flachdach- / Bodengestells.

Bei der hier dargestellten Ausführungsform erstreckt sich der Bodenbereich vorzugsweise auf einer Seite neben den hintereinander angeordneten Vorsprüngen sowie über einen vorbestimmten Absatz hinter dem hinteren Vorsprung 4. Über den Bodenbereich 1 sind mehrere Stege 20 ausgebildet, welche sich parallel zueinander und zu den hinter einander angeordneten Vorsprüngen 3, 4 erstrecken. Die einzelnen Vorsprünge weisen hierbei im Querschnitt eine rechteckige Form auf und sind von unten, d.h. von der Unterseite des Gestells offen zugänglich. Insbesondere erstrecken sich zwei Stege neben den beiden Vorsprüngen 3, 4, welche durch einen vorbestimmten Abstand voneinander getrennt sind, wobei einer der Stege unmittelbar an die beiden Vorsprünge 3, 4 angrenzt, und der andere Steg 20 mit dem Bodenbereich abschließt, d.h. die Außenkante des Gestells bildet.

An der gegenüberliegenden Seite des Gestells, d.h. der Seite der Vorsprünge 3, 4, welche keinen zusätzlichen Bodenbereich aufweist, ist an der Außenkante ebenfalls mit einem Stegelement 21 versehen. Hierbei erstreckt sich das Stegelement 21, welches die gleiche Form wie die Stegelemente 20 aufweist, jedoch teilweise im Bereich der Vorsprünge, so dass das Stegelement 21 nur abschnittsweise aus den Vorsprüngen 3, 4 heraustritt und sich somit nicht sichtbar über den ganzen Bereich erstreckt. Zusätzlich ist neben dem Steg 21 noch ein kurzer Bodenbereichabschnitt angeordnet, welcher auch die Außenkante dieser Seite bildet.

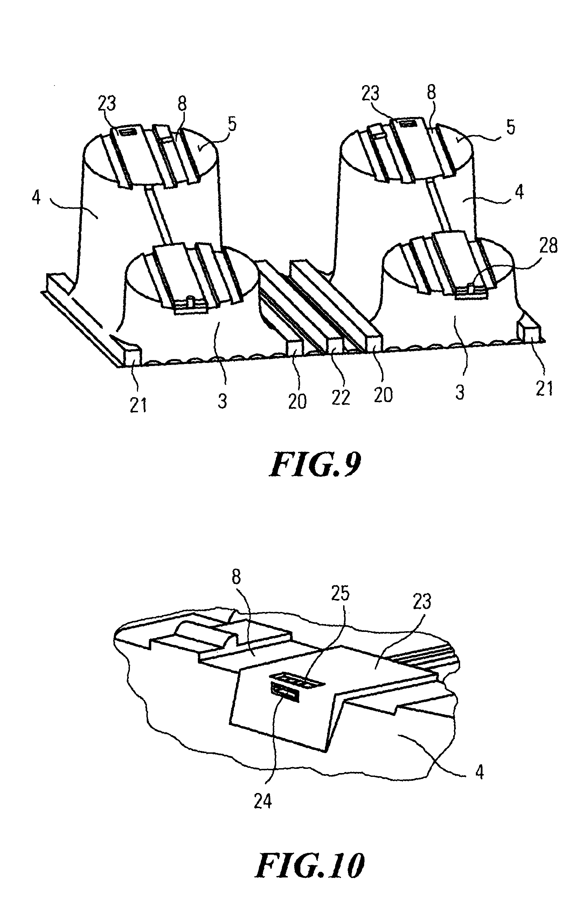

Ein entsprechendes Element ist auch in Figur 8 dargestellt, wobei es sich hierbei um ein linkes Element handelt, d.h. dieses Gestell ist im wesentlichen identisch zu dem in Figur 7 dargestellten Gestell ausgebildet, mit dem Unterschied, dass der Stege 20 aufweisende Bodenbereich an der anderen Seite der Vorsprünge 3, 4 angeordnet ist, d.h. das Gestell gemäß Figur 8 ist spiegelverkehrt zu dem in Figur 7 dargestellten Gestell ausgebildet. Ferner ist der an der Außenkante des Bodenbereichs 1 angeordnete und dieselbe bildende Steg 22 etwas größer als die übrigen Stege 20 ausgebildet. Hierbei sind die Abmessungen des Stegs 22 solchermaßen gewählt, dass dieser auf einen Steg 20 aufgesetzt werden kann, so dass dieser im Inneren des Steges 22 aufgenommen wird. Auf diese Weise ist es möglich, die beiden Gestelle gemäß der Figuren 7 und 8 auf einfache Art und Weise miteinander zu verbinden, wie in Figur 9 dargestellt ist. Das rechte Gestell wird in die gewünschte Position angeordnet und anschließend das Linke auf dem Außensteg aufgesetzt.

Da der äußere Steg 22 auf den äußeren Steg 20 des daneben angeordneten Gestells aufgestülpt wird, sind im zusammengesetzten Zustand zwischen den beiden Vorsprungpaaren 3, 4 drei Stege angeordnet, durch welche auch der Abstand zwischen den beiden Vorsprungpaaren bestimmt wird. An jeder Außenseite des solchermaßen miteinander verbundenen Gestells sind die Stege 21 sichtbar.

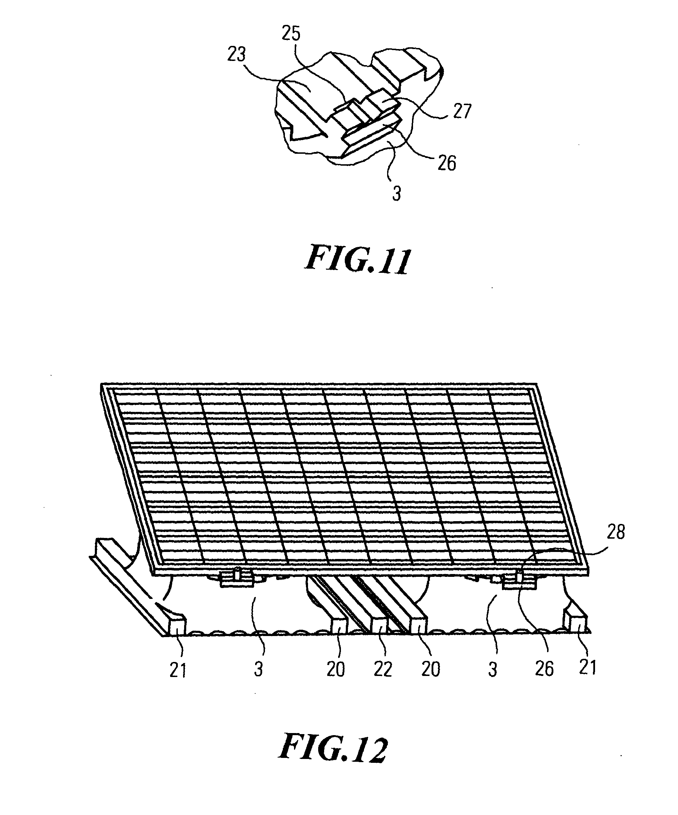

Im Folgenden wird die Auflagefläche der Vorsprünge 3, 4 unter Bezugnahme auf die Figuren 7, 8 sowie auf die Figuren 10 und 11 beschrieben. Auch hier sind die schrägen Auflageflächen 5 der Vorsprünge 3 und 4 entsprechend den Auflageflächen 5 der vorhergehenden Ausführungsform zueinander angeordnet.

Über die Auflageflächen 5 erstrecken sich Rillen 8 parallel zueinander und parallel zu den Stegen 20, 21, 22. Hierbei sind die einzelnen Rillen 8 ungleichmäßig über der Auflagefläche 5 angeordnet, so dass an einer Seite der Auflagefläche 5, d.h. der dem Steg 21 zugewandten Seite, ein breiterer Bereich 23 zwischen zwei Rillen 8 ausgebildet wird. Dieser breite Bereich 23 ist jeweils an der von dem Bodenbereich abgewandten Seite der Auflagefläche angeordnet.

Oberhalb und unterhalb des Auflagebereichs 23 jedes Vorsprunges 3, 4 sind hierbei Durchtrittsöffnungen 24 ausgebildet, die ebenfalls in einer Linie zueinander angeordnet sind, so dass ein langgestrecktes Profilelement von der hinteren Seite des Vorsprungs 4 bis zu der vorderen Seite des Vorsprungs 3 durchgeführt werden kann.

Die Rückseite des hinteren Vorsprungs 4, insbesondere der Bereich der Durchtrittsöffnung 24 sowie des Auflageabschnitts 23 ist in Figur 10 im Detail dargestellt. Wie deutlich wird, ist die Durchtrittsöffnung 24 als rechteckige Öffnung ausgebildet. Vorzugsweise ist der Vorsprung im Bereich der Durchtrittsöffnung 24 verstärkt ausgebildet, um die Stabilität zu erhöhen. An der anderen Seite des Vorsprungs 4 ist eine identische Durchtrittsöffnung 24 ausgebildet, so dass ein langgestrecktes Profilelement durch beide Öffnungen hindurch geführt werden kann, und teilweise im Inneren des Vorsprungs angeordnet ist. Ferner ist auf der Oberseite des Auflageabschnittes 23 eine Aufnahmeöffnung 25 ausgebildet, welche direkt oberhalb der Durchtrittsöffnung 24 ausgebildet ist, so dass es möglich ist, durch die Aufnahmeöffnung 25 direkt auf das eingeführte Profilelement zuzugreifen. Statt der Durchtrittsöffnungen kann hierbei auch, sofern erwünscht, ein Kanal in dem Vorsprung ausgebildet werden.

Im Bereich des vorderen Vorsprungs 3 ist an der vorderen Seite, die insbesondere in Figur 11 eine Vergrößerung eines Details dargestellt, vor der Durchtrittsöffnung ein Anschlagelement 26 ausgebildet, so dass ein von dem hinteren Vorsprung 4 aus eingeführtes Profilelement nicht einfach aus dem vorderen Vorsprung 3 wieder austreten kann, sondern durch das Anschlagelement 26 gehalten wird. Hierbei ist das Anschlagelement als ein nasenartig ausgebildetes Element geformt, welches eine Anschlagfläche für das längsgestreckte Element bereitstellt.

Gleichzeitig ist oberhalb der Durchtrittsöffnung 24 bzw. oberhalb des Anschlagelementes 26 eine Aufnahmeöffnung 25 ausgebildet, welche im Bereich des vorderen Vorsprungs 3 keine Trennung zur Durchtrittsöffnung 24 aufweist, so dass beide Öffnungen ineinander übergehend ausgebildet sind. Hierdurch wird einerseits der Zugriff auf das Ende des Profilelements gewährleistet, gleichzeitig kann die Positionierung des Profilelements an dem Anschlagelement 26 überprüft werden. Ferner sind beidseitig der Aufnahmeöffnung 25 Fixierelemente 27 angeordnet, welche sich über die Auflagefläche hinaus erstrecken.

In Figur 9 sind die miteinander verbundenen Gestelle dargestellt, wobei bereits eine Profilschiene als Profilelement zwischen den Vorsprüngen 3 und 4 eingeführt ist, und an dem vorderen Vorsprung 3 mittels eines Befestigungselementes 28 in der Position gehalten wird.

Figur 12 zeigt die miteinander verbundenen Gestelle nach dem Befestigen eines Solarpaneels auf denselbigen. Wie insbesondere aus Figur 12 deutlich wird, liegt die untere Kante des Solarpaneels an dem Fixierelement 27 des vorderen Vorsprungs 3, d.h. an der dem Vorsprung 4 zugewandten Fläche des Fixierelementes 27, an, und wird so in der Position gehalten. Die Fixierung des Solarpaneels erfolgt über Befestigungs- bzw. Klemmelemente 28, welche bereits zuvor durch die Aufnahmeöffnung mit der Profilschiene in Verbindung gebracht wurde.

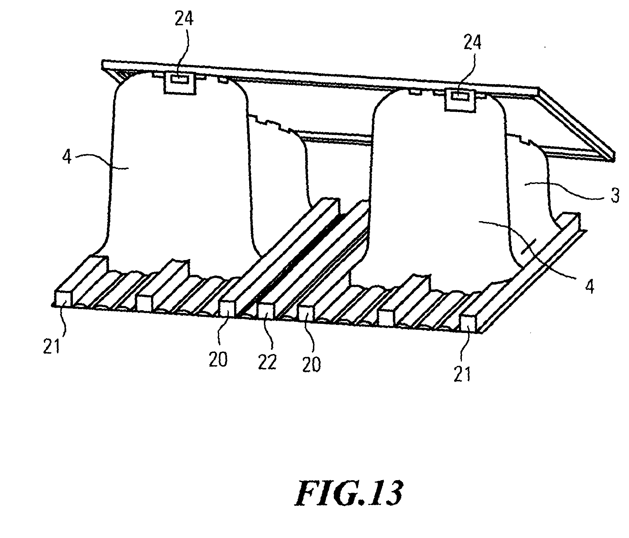

Ein entsprechendes mit Solarpaneel versehenes Gestell von hinten ist in Figur 13 dargestellt. Es wird deutlich, dass sich das Solarpaneel über die gesamte Breite der beiden miteinander verbundenen Gestelle erstreckt.

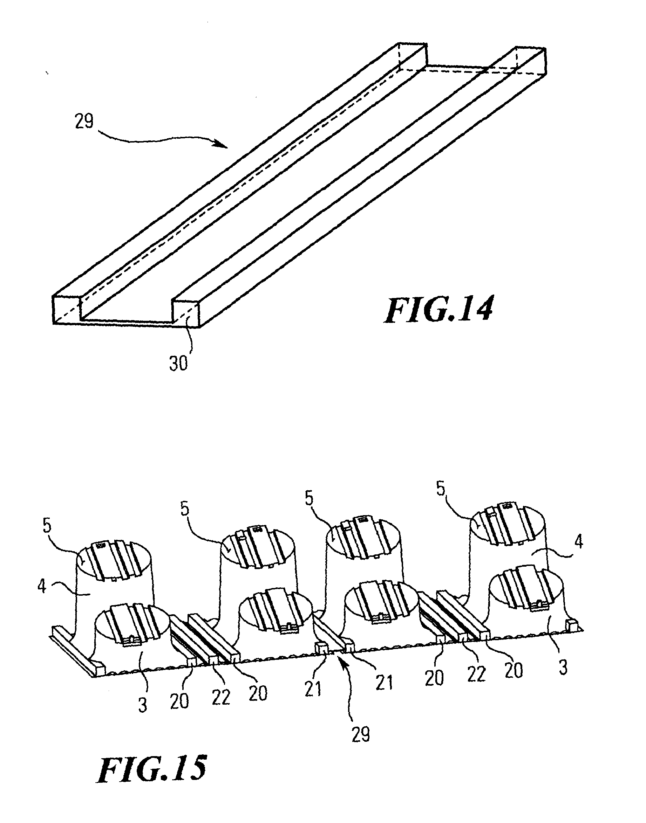

Figur 14 zeigt ein Verbindungselement 29, welches im wesentlichen U-ftirmig ausgebildet ist, wobei die beiden Schenkel 30 im Querschnitt rechteckig ausgebildet sind. Hierbei entspricht die Form der U-Schenkel 30 im wesentlichen der Form der Stege 21, wobei die Größe solchermaßen gewählt ist, dass die U-Schenkel 30 von den Stegen 21 aufgenommen werden können, wenn die Stege 21 der Gestelle auf das Verbindungselement gestülpt werden.

Auf diese Weise ist es möglich, die Außenseiten zweier Gestelle einfach miteinander zu verbinden, wobei bereits der Abstand zwischen den einzelnen Gestellen zueinander durch die Basisfläche des U-förmigen Verbindungselementes vorgegeben wird. Das Verbindungselement selbst kann mit den Gestellen verschraubt werden, indem eine Schraube oder anderes Verbindungselement von außen in das Stegelement 21 durch den U-Schenkel 30 des Verbindungselements geführt wird.

## Patentansprüche

1. Stapelbares Flachdach- / Bodengestell für Solarpaneele mit einem schrägen pultförmigen Auflagebereich für das Solarpaneel und mit plattenartigen Bodenbereichen (1),
**dadurch gekennzeichnet, dass**
angrenzend an den plattenartigen Bodenbereich (1) wenigstens zwei Auflagevorsprünge (3, 4) ausgebildet sind, wobei jeder Vorsprung (3, 4) eine schräge Auflagefläche (5) aufweist und wobei der schräge pultartige Auflagebereich aus diesen schrägen Auflageflächen (5) der Vorsprünge besteht.

2. Stapelbares Flachdach- / Bodengestell für Solarpaneele gemäß Anspruch 1, **dadurch gekennzeichnet, dass** die beiden Vorsprünge (3, 4) hintereinander angeordnet sind, wobei der hintere Vorsprung (4) höher als der vordere Vorsprung (3) ausgebildet ist.

3. Stapelbares Flachdach- / Bodengestell für Solarpaneele gemäß Anspruch 1 oder 2, **dadurch gekennzeichnet, dass** wenigstens in den sich an die Vorsprünge (3, 4) angrenzenden Abschnitten des Bodenbereich (1) Stege (21, 22) ausgebildet sind, welche parallel zu den sich hintereinander erstreckenden Vorsprüngen angeordnet sind.

4. Stapelbares Flachdach- / Bodengestell für Solarpaneele gemäß Anspruch 3, **dadurch gekennzeichnet, dass** sich rechts und/oder links von den Vorsprüngen (3, 4) zwei unter einem vorbestimmten Abstand parallel zueinander angeordnete Stege (20, 21) ausgebildet sind, wobei die Stege (20, 21) von der Unterseite offen und im Querschnitt rechteckig sind und wobei die Außenkante von dem Bodenbereich (1) von einem Steg (20, 22) gebildet ist.

5. Stapelbares Flachdach- / Bodengestell für Solarpaneele gemäß Anspruch 3 oder 4, **dadurch gekennzeichnet, dass** im montierten Zustand jeweils zwei Stege (20, 22) aufweisende Abschnitte des Bodenbereichs (1) nebeneinander angeordnet sind, wobei ein an der Außenkante angeordneter Steg (22) größer ausgebildet ist als die anderen Stege (20) und auf den an der Außenkante des benachbarten Bodenbereichs (1) angeordneten Steg (20) aufstülpbar ist.

6. Stapelbares Flachdach- /Bodengestell für Solarpaneele gemäß Anspruch 1 oder 2, **dadurch gekennzeichnet, dass** vier Vorsprünge (3, 4) an den Bodenbereich angrenzend ausgebildet sind, wobei jeweils zwei Paare vorderer (3) und hinterer (4) Vorsprünge unter einem vorbestimmten Abstand zueinander an den Bodenbereich (1) angrenzend angeordnet sind.

7. Stapelbares Flachdach- / Bodengestell für Solarpaneele nach wenigstens einem der Ansprüche 1-3, **dadurch gekennzeichnet, dass** sich der Bodenbereich (1) zwischen den unter einem vorbestimmten Abstand zueinander angeordneten Paaren vorderer (3) und hinterer Vorsprünge (4) erstreckt.

8. Stapelbares Flachdach- / Bodengestell für Solarpaneele nach wenigstens einem der Ansprüche 1-7, **dadurch gekennzeichnet, dass** der Bodenbereich (1) jeweils an eine Vorderkante jedes vorderen Vorsprungs (3) und/oder eine Hinterkante jedes hinteren Vorsprunges (4) angrenzt.

9. Stapelbares Flachdach- / Bodengestell für Solarpaneele nach wenigstens einem der Ansprüche 1-8, **dadurch gekennzeichnet, dass** die Vorsprünge (3, 4) jeweils kegelstumpfartig ausgebildet sind.

10. Stapelbares Flachdach- / Bodengestell für Solarpaneele nach wenigstens einem der Ansprüche 1-9, **dadurch gekennzeichnet, dass** der Bereich (6) zwischen jedem Paar vorderer (3) und hinterer Vorsprünge (4) muldenförmig ausgebildet ist.

11. Stapelbares Flachdach- / Bodengestell für Solarpaneele nach Anspruch 10, **dadurch gekennzeichnet, dass** der muldenförmig ausgebildete Bereich (6) oberhalb des Bodenbereichs (1) angeordnet ist und sich bis zu den Seitenbereichen der hintereinander angeordneten Vorsprünge (3, 4) erstreckt.

12. Stapelbares Flachdach- / Bodengestell für Solarpaneele nach Anspruch 10 oder 11, **dadurch gekennzeichnet, dass** sich die Außenkante jedes Vorsprungpaares (2) wulstartig über den Bodenbereich erhebt

13. Stapelbares Flachdach- / Bodengestell für Solarpaneele nach wenigstens einem der Ansprüche 10 bis 12, **dadurch gekennzeichnet, dass** die beiden voneinander beabstandeten Paare der Vorsprüngen (3, 4) an ihren sich gegenüberliegenden Seitenflächen sich senkrecht von dem Bodenbereich (1) nach oben erstreckende Seitenflächenabschnitte (12) aufweisen, welche anschließend unter einem vorbestimmten Winkel in die Vorsprünge bzw. die Mulde übergehen.

14. Stapelbares Flachdach- / Bodengestell für Solarpaneele nach wenigstens einem der Ansprüche 1 bis 13, **dadurch gekennzeichnet, dass** die schrägen Auflageflächen (5) jedes Vorsprungs (3, 4) mit parallel zueinander angeordneten Rillen (8) ausgebildet sind, die in einer Linie von dem vorderen Vorsprung (3) zu dem hinteren Vorsprung (4) verlaufen.

15. Stapelbares Flachdach- / Bodengestell für Solarpaneele nach wenigstens einem der Ansprüche 1 bis 14, **dadurch gekennzeichnet, dass** unterhalb der Auflagefläche (5) in einem Bereich zwischen zwei Rillen (8) an der Vorder- und Rückseite der Vorsprünge (3, 4) Durchtrittsöffnungen (24) zur Aufnahme eines sich zwischen den beiden hintereinander angeordneten Vorsprüngen erstreckenden Profilelements ausgebildet ist.

16. Stapelbares Flachdach- / Bodengestell für Solarpaneele nach Anspruch 15, **dadurch gekennzeichnet, dass** sich das Profilelement von der Rückseite des hinteren Vorsprungs (4) bis zu der Vorderseite des vorderen Vorsprungs (3) erstreckt.

17. Stapelbares Flachdach- / Bodengestell für Solarpaneele nach Anspruch 15 oder 16, **dadurch gekennzeichnet, dass** im Bereich der Durchtrittsöffnung (24) in der Vorderseite des vorderen Vorsprungs (3) ein Anschlagelement (26) ausgebildet ist, welches die Endposition des langgestreckten Profils festlegt.

18. Stapelbares Flachdach- / Bodengestell für Solarpaneele nach wenigstens einem der Ansprüche 15 bis 17, **dadurch gekennzeichnet, dass** die Durchtrittsöffnungen (24) an der von beiden nebeneinander angeordneten Stegen abgewandten Hälfte der Vorsprünge (3, 4) angeordnet sind.

19. Stapelbares Flachdach- / Bodengestell für Solarpaneele nach wenigstens einem der Ansprüche 15 bis 18, **dadurch gekennzeichnet, dass** die Vorsprünge (3, 4) im Bereich der Durchtrittsöffnungen (24) verstärkt sind.

20. Stapelbares Flachdach- / Bodengestell für Solarpaneele nach wenigstens einem der Ansprüche 15 bis 19, **dadurch gekennzeichnet, dass** in den Auflageflächen (5) der Vorsprünge (3, 4) oberhalb der Durchtrittsöffnungen (24) Aufnahmeöffnungen (25) ausgebildet sind, wobei die Aufnahmeöffnung (25) in dem hinteren Vorsprung (4) in der Nähe der hinteren Kante und die Aufnahmeöffnung (25) in dem vorderen Vorsprung in der Nähe des Anschlagelements (26) angeordnet ist.

21. Stapelbares Flachdach- / Bodengestell für Solarpaneele nach wenigstens einem der Ansprüche 15 bis 20, **dadurch gekennzeichnet, dass** oberhalb des Anschlagelements (26) Fixierabschnitte (27) angeordnet sind, welche sich beidseitig der Aufnahmeöffnung (25) erstrecken.

22. Stapelbares Flachdach- / Bodengestell für Solarpaneele nach wenigstens einem der Ansprüche 1-21, **dadurch gekennzeichnet, dass** an der von dem vorderen Vorsprung (3) abgewandten Kante der schrägen Auflagefläche des hinteren Vorsprungs (4) Erhebungen (10) angeordnet sind.

23. Stapelbares Flachdach- / Bodengestell für Solarpaneele nach Anspruch 22, **dadurch gekennzeichnet, dass** an der von dem vorderen Vorsprung (3) abgewandten Seite der Erhebungen (10) Schlitze (11) ausgebildet sind.

24. Stapelbares Flachdach- / Bodengestell für Solarpaneele nach Anspruch 22 oder 23, **dadurch gekennzeichnet, dass** die Erhebungen (10) zwischen den Rillen (8) ausgebildet sind.

25. Stapelbares Flachdach- / Bodengestell für Solarpaneele nach wenigstens einem der Ansprüche 1-24, **dadurch gekennzeichnet, dass** unterhalb der Vorderkante des vorderen Vorsprunges (3) eine Aufnahmeöffnung (9) ausgebildet ist.

26. Stapelbares Flachdach- / Bodengestell für Solarpaneele nach wenigstens einem der Ansprüche 1-25, **dadurch gekennzeichnet, dass** in den einander zugewandten Seitenflächen zweier benachbarter hinterer Vorsprünge (4) parallel zueinander verlaufende Schlitze (7) ausgebildet sind.

27. Stapelbares Flachdach- / Bodengestell für Solarpaneele nach wenigstens einem der Ansprüche 1-26, **dadurch gekennzeichnet, dass** der Vorderbereich des vorderen Vorsprungs (3) und der hintere Bereich des hinteren Vorsprungs (4) jeweils abgerundet ausgebildet sind.

28. Stapelbares Flachdach- / Bodengestell für Solarpaneele nach wenigstens einem der Ansprüche 1-27, **dadurch gekennzeichnet, dass** der Bodenbereich (1) an der den Vorsprüngen zugewandten Oberfläche eine gewellte Struktur aufweist.

29. Stapelbares Flachdach- / Bodengestell für Solarpaneele nach wenigstens einem der Ansprüche 1-28, **dadurch gekennzeichnet, dass** die Unterseite des Bodenbereichs Greifelemente (19) aufweist, um eine Haftreibung zu erzielen.

30. Stapelbares Flachdach- / Bodengestell für Solarpaneele nach Anspruch 29, **dadurch gekennzeichnet, dass** die Greifelemente (19) als spitze Vorsprünge ausgebildet sind.

31. Stapelbares Flachdach- / Bodengestell für Solarpaneele nach wenigstens einem der Ansprüche 1-30, **dadurch gekennzeichnet, dass** das Gestell aus HDPE und/oder recyceltem HDPE hergestellt ist.

32. Gestellsystem für Solarpaneele umfassend wenigstens zwei stapelbare Flachdach- / Bodengestelle für Solarpaneele nach wenigstens einem der Ansprüche 1 bis 31, **dadurch gekennzeichnet, dass** jeweils zwei mit den Vorsprüngen (3, 4) unmittelbar nebeneinander angeordneten Flachdach- / Bodengestelle durch ein Verbindungselement (29) miteinander fixierbar sind, wobei beide Gestelle auf das Verbindungselement aufstülpbar sind.

33. Gestellsystem nach Anspruch 32, **dadurch gekennzeichnet, dass** das Verbindungselement (29) im Querschnitt U-förmig ausgebildet ist, wobei die beiden U-Schenkel (30) im wesentlichen der Form der Stege (21) im Bereich der Flachdach- / Bodengestelle entsprechen und ein Aufstülpen der Unterseite der Stege (21) der Flachdach- / Bodengestelle gewährleisten.
